# EUROPÄISCHE PATENTANMELDUNG

(11) **EP 2 000 819 A1**
(43) Veröffentlichungstag der Anmeldung: **10.12.2008**
(21) Anmeldenummer: 07109540.0
(22) Anmeldetag: 04.06.2007
(51) Int. Cl.: G01S 5/14, H01Q 1/32, H01Q 5/00, H01Q 21/00

(54) **Antennenkombination für eine mobile GNSS-Station und mobile GNSS-Station**

(71) Anmelder: Leica Geosystems AG, 9435 Heerbrugg (CH)
(72) Erfinder: Stucki, Silvan, 9000 St. Gallen (CH)
(74) Vertreter: Büchel, Kaminski & Partner

(57) **Zusammenfassung**

Antennenkombination (2) für eine mobile GNSS-Station, mit einer planaren, insbesondere kreisscheibenförmigen, GNSS-Antenne 20 mit einer im Wesentlichen vertikal ausgerichteten Drehachse zum Empfang von zirkular polarisierten GNSS-Satellitensignalwellen, und einer ersten Funk-Antenne 30 zum Empfang und/oder Aussenden von Funksignalwellen mit GNSS-Korrekturinformation mit mindestens einem ersten Frequenzband in einem Frequenzbereich von 80MHz bis 2450MHz. Die erste Funk-Antenne 30 ist dabei im Wesentlichen auf Höhe der GNSS-Antenne angeordnet und umgibt die GNSS-Antenne (20) in Umfangsrichtung mindestens teilweise, insbesondere wobei die erste Funk-Antenne (30) und die GNSS-Antenne (20) konzentrisch angeordnet sind.

## Beschreibung

Die Erfindung betrifft eine Antennenkombination für eine mobile GNSS-Station nach dem Oberbegriff des Anspruchs 1 und eine mobile GNSS-Station für den Einsatz in einem relativen satellitengestützten Positionierungssystem zum Durchführen von präzisen Vermessungsarbeiten nach dem Oberbegriff des Anspruchs 12.

Global Navigation Satellite System (GNSS) ist ein Oberbegriff für alle modernen satellitengestützten Positionierungssysteme. Momentan in Betrieb sind das GLONASS, das vom russischen Verteidigungsministerium betrieben wird, und das Global Positioning System (GPS), das vom US-Verteidigungsministerium betrieben wird. Im Aufbau befindet sich ausserdem das Galileo- System. Die im Folgenden beschriebene Erfindung kann in jedem dieser satellitengestützten Positionierungssysteme Anwendung finden. Als erstes System wurde das GPS entwickelt, das momentan am häufigsten angewendet wird. Das System beinhaltet eine Konstellation von 24 Satelliten mit hinreichender Redundanz, sodass typischer Weise zu jeder Zeit und von jedem Ort aus Sichtkontakt zu etwa sechs Satelliten besteht. Zur Bestimmung der dreidimensionalen Lage eines Benutzers ist es notwendig, von mindestens vier Satelliten Signale zu empfangen. Die Positioniergenauigkeit ist dabei auf etwa 10m beschränkt.

Ein relatives GNSS ist eine Technik, um die erreichbare Positioniergenauigkeit auf einen Submeterbereich zu erhöhen. Dazu wird ein GNSS-Empfänger an einem Ort mit bekannter dreidimensionaler Position aufgestellt, wobei der GNSS-Empfänger somit als Referenzstation fungiert. Durch einen Vergleich der mittels den GNSS-Signalen ermittelten Position mit der bekannten Position können auf die Positioniergenauigkeit negativ wirkende Einflüsse wie zum Beispiel Refraktion oder Orbitfehler deutlich verringert werden.

Die dabei errechneten Korrekturdaten können nun mittels einer zusätzlichen Funkverbindung zu mehreren Nutzerstationen gesendet werden, um eine entsprechend genaue Positionierung der Nutzerstationen zu ermöglichen.

Es gibt zwei Möglichkeiten der relativen GNSS-Positionierung: die Differentielle GNSS-Positionierung (DGNSS) und die Real Time Kinematik-Positionierung (RTK). Bei der RTK-Positionierung ist ein höherer Datenfluss an Korrekturdaten notwendig, wobei auch eine höhere Positioniergenauigkeit erreicht werden kann. So ist bei der DGNSS-Positionierung eine Genauigkeit im Meterbereich möglich, wohingegen bei der RTK-Positionierung eine Genauigkeit im Zentimeterbereich erreicht werden kann.

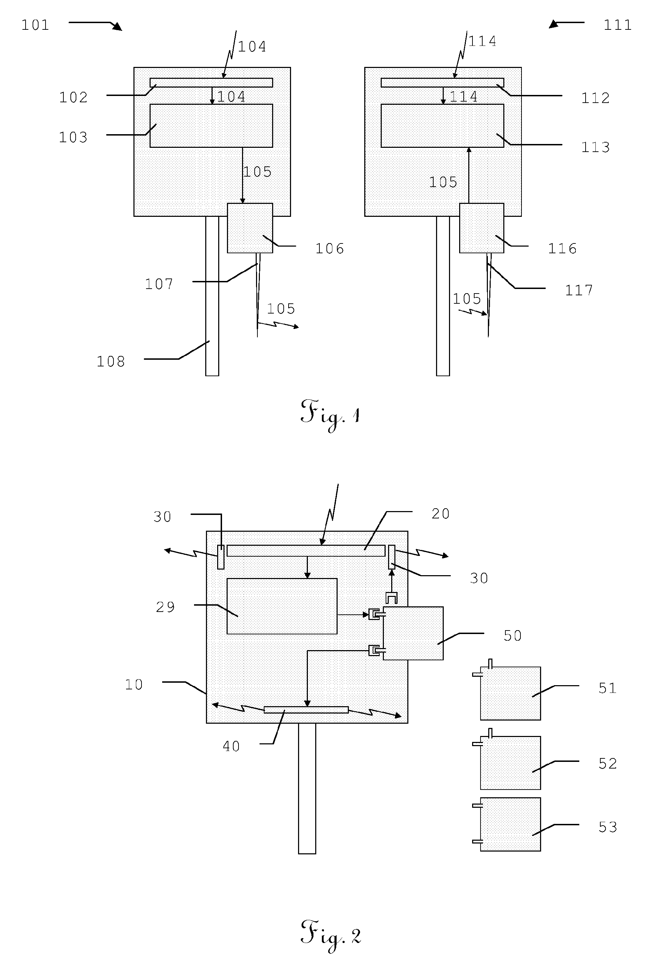

Ein Beispiel einer relativen GNSS-Positionierung für Vermessungsarbeiten ist in Figur 1 gezeigt. Ein GNSS-Empfänger 103 einer Referenzstation 101 empfängt über eine GNSS-Antenne 102 Positionssignale 104 von Satelliten, um kontinuierlich eine gemessene Position der fix positionierten Referenzstation 101 zu ermitteln. Zusätzlich ist die exakte Fixposition der Referenzstation 101 bekannt, wodurch mittels Differenzbildung kontinuierlich Korrekturdaten 105 errechnet werden können. Diese GNSS-Korrekturdaten 105 werden an ein Funkgerät 106 übermittelt und in einem bestimmten Frequenzband über die Funkantenne 107 ausgesendet.

Eine Nutzerstation 111 empfängt mit einem Funkgerät 116 über die Funkantenne 117 die GNSS-Korrekturdaten 105, die an den GNSS-Empfänger 113 der Nutzerstation 111 weitergeleitet werden. Gleichzeitig empfängt der GNSS-Empfänger 113 der Nutzerstation über eine GNSS-Antenne 112 GNSS-Positionssignale 114. Mittels der Korrekturdaten 105 ist eine Korrektur der durch die GNSS-Positionssignale ermittelten Position der Nutzerstation 111 möglich.

Moderne GNSS-Stationen können sowohl als Nutzerstation als auch, bei bekannter Positionierung, als Referenzstation fungieren und werden beispielsweise GNSS-Smartstationen genannt.

Da für die GNSS-Korrekturdaten meist ein standardisiertes Datenformat verwendet wird, kann Ausrüstung verschiedener Anbieter kombiniert werden. Nicht standardisiert sind allerdings die Radiofrequenzen, mit denen die die GNSS-Korrekturdaten tragenden Wellen ausgesendet bzw. empfangen werden.

Bei der Wahl geeigneter Funkfrequenzen oder Kommunikationsdiensten für die GNSS-Datenübertragung spielen technische, wirtschaftliche und administrative Aspekte eine Rolle.

Allgemein gilt: je niedriger die Frequenz, desto grösser ist der mögliche Abstand zwischen dem Sender der Korrekturdaten und dem Empfänger. Gleichzeitig gilt aber auch: je höher die Frequenz, desto höher ist die mögliche Datenübertragungsrate.

Radiofrequenzen sind allerdings nicht frei nutzbar. Die Nutzung ist durch internationale Vereinbarungen und nationale Gesetze geregelt.

Beispielsweise gibt es in weiten Teilen Europas Frequenzen im unteren Mikrowellen-Bereich, auf welchen mit geringer Leistung genehmigungsfrei gearbeitet werden kann. Die Sendereichweite ist dabei auf wenige Kilometer begrenzt.

Im Rahmen der von Rundfunkanstalten betriebenen Datenübermittlung mit Hilfe des Radio Data Systems (RDS) werden in vielen Ländern flächendeckend GNSS-Korrekturen ausgestrahlt.

Auch Mobiltelefonfrequenzen werden häufig für die Übertragung von Korrekturinformationen genutzt.

Um bei GNSS-Empfänger-Stationen eine hohe Kombinierbarkeit mit unterschiedlichsten Systemen durch eine Abdeckung verschiedener Frequenzen für die Korrekturdatenübertragung zu ermöglichen, werden bekannte GNSS-Stationen 101, wie in Figur 1 dargestellt, beispielsweise mit einer Steck-Aufnahme für ein Funkmodul 106 ausgebildet, wobei das Funkmodul 106 sowohl ein Funk-Modem als auch eine nach unten zeigende Stabantenne 107 enthält und durch die SteckVerbindung mit dem GNSS-Empfänger 103 verbunden ist. Je nach verwendeter Frequenz des Systems, in dem die GNSS-Station 101 angewendet wird, kann zur Kommunikation von GNSS-Korrekturdaten 105 ein entsprechendes Funkmodul 106 in die GNSS-Station 101 eingesetzt werden. Das Funkmodul 106 empfängt dann Korrekturdaten 105, die an den GNSS-Empfänger 103 weitergeleitet und zur Korrektur der gemessenen Position verwendet werden. Als Nachteilig erweist sich allerdings bei einer neben dem Vermessungsstab 108 angeordneten Stabantenne 107, dass sie im Gelände durch Umwelteinflüsse und/oder mechanische Beschädigung zerstört werden kann, keine optimale Abstrahlcharakteristik aufweist und einen relativ kleinen Frequenzbereich abdeckt sowie dass die Strahlung durch einen den Vermessungsstab 108 haltenden Benutzer beeinflusst werden kann und.

Eine weitere im Stand der Technik bekannte GNSS-Empfänger-Station ist mit einer Stabantenne, die extern nach oben zeigend und mittig auf der GNSS-Station angeordnet ist, realisiert. Allerdings ist dabei eine Beeinflussung der durch die darunter liegende GNSS-Antenne empfangenen GNSS-Signale und somit der GNSS-Genauigkeit nicht auszuschliessen. Des Weiteren ist diese Lösung bei dem Gebrauch im Gelände ebenso beschädigungsanfällig und ungeschickt, da stets Achtsamkeit vorausgesetzt ist.

Die US 6,751,467 und die US 7,110,762 beschreiben als Stand der Technik einen GPS-Empfänger in einem Gehäuse, in dem zusätzlich ein Funk-Modem-Empfänger unterhalb des GPS-Empfängers und eine Funkantenne integriert sind. Die als Slot-Antenne ausgebildete Funkantennengeometrie ist auf einer Polyimidfolie aufgebracht. Die Folie mit der Antennengeometrie wird zu einem Kreiszylindermantel gerollt und unterhalb der GPS-Antenne um den Funk-Modem-Empfänger herum im Gehäuse des GPS-Empfängers angeordnet. Die Abstrahlcharakteristik der beschriebenen Antennenanordnung weist allerdings eine starke Richtungsabhängigkeit auf, des Weiteren deckt diese Antennenanordnung einen relativ kleinen Frequenzbereich ab und weist einen grossen Platzbedarf auf.

Die US 5,831,577 und die US 5,691,726 offenbaren eine Antennenkombination aus einer GNSS-Antenne, die eine nach oben zeigende, strahlende Platine und eine darunter liegende Grundplatine aufweist, und einer Drahtschleifen-Antenne, die unterhalb oder oberhalb der GNSS-Antenne gewunden angeordnet und zum Empfang von Funksignalen mit Korrekturinformation ausgebildet ist. Bei der Anordnung der Drahtschleifen-Funkantenne oberhalb der GNSS-Antenne ist allerdings eine Beeinflussung der durch die darunter liegende GNSS-Antenne empfangenen GNSS-Signale und somit der GNSS-Genauigkeit nicht auszuschliessen. Bei der Anordnung unterhalb der GNSS-Antenne wird die Abstrahlcharakteristik der gewundenen Funkantenne durch die GNSS-Antenne beeinflusst. Ebenso nachteilig ist die geringe Kompatibilität mit weiteren Systemen, da nur ein kleiner Frequenzbereich durch die Drahtschleifen-Funkantenne abgedeckt wird und daher nur mit darauf abgestimmten Geräten über Funk kommuniziert werden kann. So ist es üblich, dass manche Anbieter ihre GNSS-Empfänger-Einheiten für verschiedene Anwendungsgebiete (Europa, USA) und für den Gebrauch in verschiedenen Systemen jeweils mit entsprechend dafür spezialisierten Antennengeometrien ausstatten müssen.

Zusammenfassend treten bei bisherigen Lösungen von GNSS-Empfängern negative gegenseitige Beeinflussungen der im Gehäuse angeordneten Antennen auf, weitere Lösungen sind zerstörungsanfällig und beim Gebrauch im Gelände nicht handhabungsfreundlich (z.B. Bruch einer extern angeordneten Antenne), sind nicht kompakt oder weisen eine geringe Kompatibilität zum Kommunizieren von Korrekturdaten mit weiteren Einheiten auf.

Eine Aufgabe der Erfindung ist somit das Bereitstellen einer GNSS-Empfänger-Einheit, die wenig zerstörungsanfällig, kompakt und/oder handhabungsfreundlich beim Gebrauch im Gelände ist und eine hohe Kompatibilität zum Kommunizieren von Korrekturdaten aufweist.

Eine weitere Aufgabe der Erfindung ist das Bereitstellen einer Antennenkombination aus einer GNSS-Antenne und einer Funkantennenanordnung mit geringer gegenseitiger Beeinflussung der einzelnen Antennen, wobei eine omnidirektionale Abstrahlcharakteristik der Funkantennenanordnung erreicht und durch einen Benutzer keine störenden Abschattungen hervorgerufen werden sollen.

Diese Aufgaben werden erfindungsgemäss durch die Gegenstände der Ansprüche 1 und 12 sowie durch die Merkmale der abhängigen Ansprüche gelöst bzw. die Lösungen fortgebildet.

Eine erfindungsgemässe Antennenkombination für eine GNSS-Empfänger-Station weist eine planare, insbesondere kreisscheibenförmige GNSS-Antenne und mindestens eine erste Funk-Antenne auf, die in Umfangsrichtung mindestens teilweise in Höhe der GNSS-Antenne um diese herum angeordnet ist und somit den Umfang der GNSS-Antenne mindestens teilweise, insbesondere im Wesentlichen vollständig, umschliesst. Insbesondere sind die erste Funk-Antenne und die GNSS-Antenne konzentrisch angeordnet. Die erste Funk-Antenne weist eine erste Antennengeometrie auf, mit der elektromagnetische Wellen mit einem Frequenzband in einem Frequenzbereich von 80MHz bis 2450MHz omnidirektional empfangen und ausgesendet werden können. Insbesondere ist die erste Antennengeometrie als Breitband-Antenne ausgebildet und deckt den gesamten Frequenzbereich von 400MHz bis 470MHz ab.

Die Antennenkombination ist, neben weiteren Komponenten, in einem insbesondere pilzförmigen, beispielsweise aus Kunststoff bestehenden Gehäuse der GNSS-Station integriert.

Die erste Antennengeometrie ist beispielsweise aus leitenden Streifen, die auf einem nicht leitendem Trägermaterial aufgebracht sind, aufgebaut. Als sehr einfache Ausführung kann beispielsweise ein Kupferband in Form einer Monopol- oder Dipol-Antenne auf einem Kunststoffband aufgebracht werden. Die Antennengeometrie wird durch das Frequenzband, für das die Antenne ausgelegt sein soll, bestimmt und kann durch den Fachmann entsprechend ausgelegt werden. Vorteilhaft ist dabei als Trägermaterial ein Material mit einer hohen Dielektrizitätskonstante, wie zum Beispiel Polyimidfolienmaterial, zu verwenden. Ebenso denkbar ist das Aufbringen der Leiterstreifen von der ersten Antennengeometrie direkt auf einem Füllermaterial, das das Gehäuse der GNSS-Station aufweist, um die GNSS-Antenne einzubetten. Weitere mögliche Ausführungen sind ein Anbringen der Streifen direkt an der Gehäusewand auf Höhe der GNSS-Antenne, sodass die erste Antennengeometrie die GNSS-Antenne umgibt.

Als weitere Ausführungsform kann die erste Funk-Antenne auch als Drahtschleifenantenne ausgebildet sein, die in Umgangsrichtung um ein die GNSS-Antenne einbettendes Füllermaterial gewickelt ist.

Durch die Anordnung der ersten Funk-Antenne um die GNSS-Antenne werden die durch die GNSS-Antenne empfangenen GNSS-Signale und somit die Positioniergenauigkeit nicht durch die erste Funk-Antenne beeinflusst. Ebenso ermöglicht diese Anordnung der ersten Funk-Antenne eine omnidirektionale Abstrahlcharakteristik. Vorteilhaft ist GNSS-Antenne und die darum angeordnete erste Funk-Antenne ganz oben im Gehäuse angeordnet, wodurch eine Abschattung durch einen Benutzer verhindert wird.

Zusätzlich zur ersten Funk-Antenne weist die Antennenkombination insbesondere eine zweite Funk-Antenne auf, die unterhalb der GNSS-Antenne angeordnet ist. Die zweite, vorzugsweise planare Funk-Antenne ist parallel zur GNSS-Antenne ausgerichtet und mindestens 5cm von der GNSS-Antenne beabstandet. Die zweite Funk-Antenne mit einer zweiten Antennengeometrie ist vorzugsweise eine MultibandAntenne, die mehrere Frequenzbänder, die sich vom Frequenzband der ersten Funk-Antenne unterscheiden, abdeckt. Insbesondere deckt die zweite Funk-Antenne die GSM/UMTS-Frequenzbänder (850MHz, 900MHz, 1800MHz, 1900MHz, 2100MHz) ab. Ebenso ist eine Ausbildung der zweiten Antennengeometrie möglich, bei der zusätzlich das WLAN-Frequenzband (2400MHz) und das US-Funklösungen-Frequenzband (915MHz) abgedeckt werden. Derartige Antennengeometrien sind dem Fachmann bekannt und können je nach Anforderungen an die GNSS-Empfänger-Einheit entsprechend gewählt und ausgelegt werden, sodass die geforderten Frequenzbereiche abgedeckt sind.

Erfindungsgemäss werden durch die integrierte Anordnung der Antennenkombination im Gehäuse der GNSS-Station Antennen für eine Kommunikation mit verschiedenen Frequenzbändern bereitgestellt, wodurch eine hohe Kombinierbarkeit mit Ausrüstung anderer Systeme ermöglicht ist.

Ebenso integriert im insbesondere pilzförmigen Gehäuse der GNSS-Empfänger-Station sind ein GNSS-Satellitenempfänger, der direkt unter der GNSS-Antenne angeordnet ist, ein erstes Batteriefach und insbesondere ein zweites Batteriefach, sowie ein Aufnahme für ein Funkmodul.

Die Aufnahme des Funkmoduls weist Schnittstellen zur ersten und zur zweiten Funk-Antenne, sowie zum GNSS-Satellitenempfänger auf. Wie aus dem Stand der Technik bekannt, kann nun nach Bedarf ein passendes Funkmodul, das für bestimmte Frequenzbänder ausgelegt ist, an die GNSS-Station angesteckt werden. Über die Schnittstellen der Funkmodul-Aufnahme ist das angesteckte Funkmodul mit dem GNSS-Satellitenempfänger und, je nach unterstützten Frequenzbändern, entweder mit der ersten oder der zweiten Funk-Antenne verbunden. Die jeweiligen Funkmodule können somit ohne Antennen ausgebildet sein, da sie die im Gehäuse der GNSS-Station integrierten Funk-Antennen verwenden.

Die erfindungsgemässe GNSS-Station mit der integrierten Antennenkombination kann speziell als Referenzstation oder speziell als Nutzerstation ausgebildet sein. Insbesondere ist allerdings die GNSS-Station als Smartstation ausgebildet, wobei ein Benutzer die Station je nach Bedarf sowohl als Nutzerstation als auch, bei bekannter exakter Positionierung, als Referenzstation verwenden kann.

Durch die erfindungsgemässe Integration der Antennenkombination, mit der alle üblicherweise für die GNSS-Korrekturdatenübertragung verwendete Frequenzbänder abdeckbar sind, in das Gehäuse der GNSS-Station wird eine hohe Kompaktheit der GNSS-Station und eine hohe Kompatibilität mit Ausrüstung weiterer GNSS-Systeme erreicht. Durch die Anordnung der Funk-Antennen weit oben in der GNSS-Station kann des Weiteren eine omnidirektionale Abstrahlcharakteristik der Funk-Antennen erreicht werden und auf Antennen, die jeweils an den einzelnen Funkmodulen angebracht sind, verzichtet werden. Ungewünschte Abschattungen durch den Benutzer oder den Vermessungsstab, auf dem die GNSS-Station angebracht wird, werden dadurch vermindert. Ebenso ist die GNSS-Station durch die kompakt und robust realisierbare Bauweise bei dem Gebrauch im Gelände weniger zerstörungsanfällig und kann beispielsweise durch ein wasserdicht ausgebildetes Gehäuse, in welchem alle Komponenten kompakt integriert sind, gut gegen Umwelteinflüsse geschützt werden.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: einen Datenfluss bei einer relativen GNSS-Positionierung mit GNSS-Stationen des Standes der Technik;
- Fig. 2: eine schematische Darstellung einer erfindungsgemässen GNSS-Station;
- Fig. 3: ein Schnitt einer erfindungsgemässen Antennenkombination mit einer um eine GNSS-Antenne angeordneten ersten Funk-Antenne in einer ersten Ausführungsform;
- Fig. 4: ein Schnitt einer erfindungsgemässen Antennenkombination mit einer um eine GNSS-Antenne angeordneten ersten Funk-Antenne in einer zweiten Ausführungsform;
- Fig. 5: eine Antennengeometrie mit einer Dipolanordnung auf einem Trägerband als erste Funk-Antenne, in einem ausgelegten Zustand;
- Fig. 6: eine Antennengeometrie mit einer Monopolanordnung auf einem Trägerband als erste Funk-Antenne, in einem ausgelegten Zustand;
- Fig. 7: eine Antennengeometrie mit mehreren Monopolanordnungen auf einem Trägerband als erste Funk-Antenne, in einem ausgelegten Zustand; und
- Fig. 8: ein Querschnitt einer erfindungsgemässen GNSS-Station;

Figur 1 veranschaulicht den eingangs diskutierten Datenfluss bei einer relativen GNSS-Positionierung mit GNSS-Stationen des Standes der Technik.

Figur 2 zeigt einen schematischen Aufbau einer erfindungsgemässen GNSS-Station 1 mit einem Gehäuse 10, einem GNSS-Satellitenempfänger 29 und modularem Funkgerätesystem sowie mit einer im Gehäuse 10 der GNSS-Station 1 integrierten erfindungsgemässen Antennenkombination. Die Antennenkombination besteht aus einer GNSS-Antenne 20, einer ersten Funk-Antenne 30 und einer zweiten Funk-Antenne 40. Die erste Funk-Antenne 30, die um die GNSS-Antenne 20 herum angebracht ist, ist als Breitbandantenne zum Empfangen und Senden von Signalen in einem Frequenzband von 400MHz bis 470MHz ausgebildet. Die zweite Funk-Antenne 40 ist als Multibandantenne ausgebildet und weist eine zweite Antennengeometrie zum Empfang und Senden von Signalen in den Frequenzbändern 850MHz, 900MHz, 1800MHz, 1900MHz, 2100MHz und 2400MHz auf. Dadurch sind alle gängigen Frequenzbänder, in welchen Funkkommunikation stattfindet, abgedeckt. Da zur Kommunikation von GNSS-Korrekturdaten ein standardisiertes Datenformat verwendet wird, ist die erfindungsgemässe GNSS-Station somit für den Einsatz mit verschiedensten Systemen vorbereitet.

Zum Anstecken eines für ein gewünschtes Frequenzband geeigneten Funkmoduls 50,51,52,53 weist das Gehäuse eine Funk-Modul-Aufnahme mit Schnittstellen zum GNSS-Satellitenempfänger 20 und zur ersten und zweiten Funk-Antenne 30,40 auf. Die ansteckbaren Funkmodule 50,51,52,53 sind jeweils für ein bestimmtes Frequenzband ausgebildet und benötigen keine eigene Antenne, sondern weisen Anschlüsse zum GNSS-Satellitenempfänger und, je nach unterstütztem Frequenzband, zur ersten oder zur zweiten Funk-Antenne 30,40 auf.

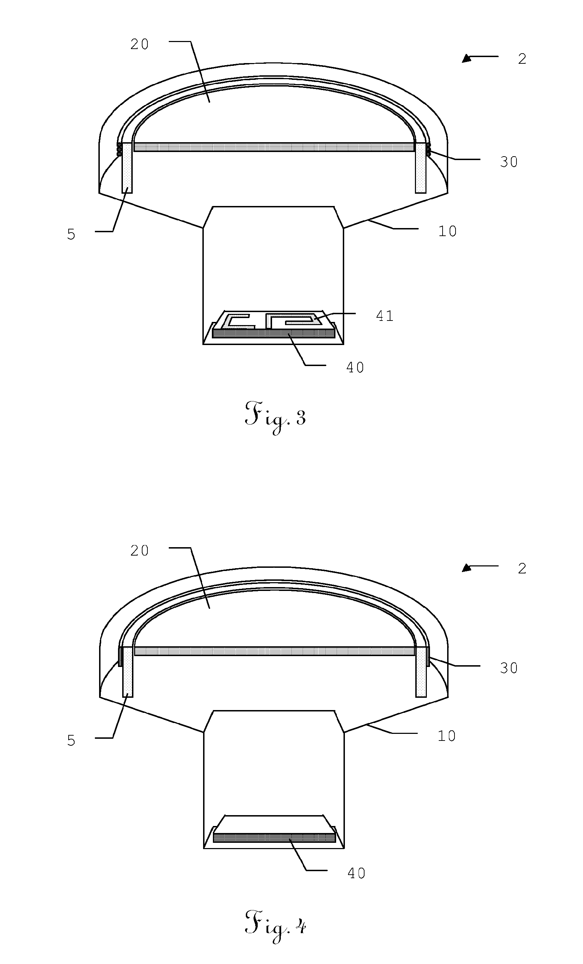

Figur 3 zeigt eine erfindungsgemässe Antennenkombination 2 für eine mobile GNSS-Station. Die Antennenkombination 2 besteht aus einer GNSS-Antenne 20, einer ersten Funk-Antenne 30 und einer zweiten Funk-Antenne 40, die alle in einem einzigen Gehäuse 10, das auch als GNSS-Stationsgehäuse fungieren kann, integriert sind. Die GNSS-Antenne 20 und die erste Funk-Antenne 30 sind oben im Gehäuse 10 im Wesentlichen auf gleicher Höhe und die zweite Funk-Antenne 40 unten im Gehäuse 10 angeordnet.

Die GNSS-Antenne 20 ist, wie nach dem Stand der Technik bekannt, als planare, kreisscheibenförmige Platine mit einer im Wesentlichen vertikal ausgerichteten Drehachse ausgebildet und ermöglicht einen Empfang von zirkular polarisierten GNSS-Satellitensignalwellen. Um die GNSS-Antenne 20 ist in Umfangsrichtung ein isolierendes, hohlzylinderförmiges Füllermaterial 5, das die GNSS-Antenne 20 einbettet, angebracht. Die als Drahtschleifenantenne ausgebildete erste Funk-Antenne 30 ist so um das Füllermaterial 5 gewickelt, dass sie die GNSS-Antenne 20 in Umfangsrichtung umgibt, vom Umfang der GNSS-Antenne 20 radial höchstens 3cm, insbesondere höchstens 2cm, beabstandet ist und für ein erstes Frequenzband in einem Frequenzbereich von 80MHz bis 2450MHz ausgelegt ist.

Die zweite Funk-Antenne 40 mit einer zweiten Antennengeometrie 41 ist parallel zur und unterhalb der GNSS-Antenne 20 sowie mindestens 5cm von dieser beabstandet angeordnet. Sie ist als Multibandantenne ausgebildet und für mehrere Frequenzbänder, die sich vom ersten Frequenzband unterscheiden, in einem Frequenzbereich von 80MHz bis 2450MHz ausgelegt. Die zweite Antennengeometrie 41 kann, wie nach dem Stand der Technik bekannt, von einem Fachmann je nach abzudeckenden Frequenzbändern ausgelegt werden.

Figur 4 stellt eine weitere Ausführung einer erfindungsgemässen Antennenkombination 2 dar. Unterscheidend zur in Figur 3 gezeigten Antennenkombination weist nun die erste Funk-Antenne 30 eine flächige Antennengeometrie aus Kupferstreifen, die auf einem nicht leitenden Trägermaterial aufgebracht sind, auf. Das Trägermaterial besteht insbesondere aus Polyimidband, worauf beidseitig Kupferstreifen aufgedampft werden können. Das Polyimidband mit der darauf aufgebrachten Antennengeometrie wird nun in Umfangsrichtung um die GNSS-Antenne 20 herum gebogen angeordnet, sodass es den Umfang der GNSS-Antenne im Wesentlichen umschliesst. Die Anordnung der Kupferstreifen auf dem Polyimidband kann, wie nach dem Stand der Technik bekannt, von einem Fachmann je nach abzudeckenden Frequenzbändern ausgelegt werden.

Alternativ könnte die Antennengeometrie aus leitenden Streifen auch direkt am Füllermaterial 5, das die GNSS-Antenne 20 in Umfangsrichtung umgibt oder direkt an der Gehäusewand auf Höhe der GNSS-Antenne 20 aufgebracht werden, sodass diese von der ersten Antennengeometrie in Umfangsrichtung umgeben wird.

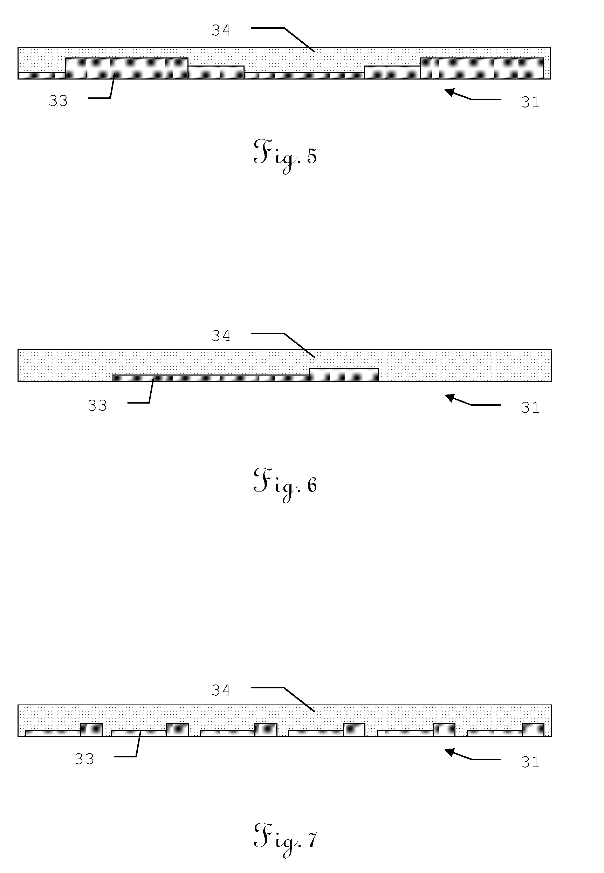

Die Figuren 5 bis 7 zeigen Ausführungsformen der ersten Funk-Antenne 30 mit verschiedenen flächigen Antennengeometrien 31 beispielsweise aus Kupferstreifen 33 auf einem Polyimidband 34, in ausgelegtem, nicht gebogenem Zustand. In Figur 5 ist eine Antennengeometrie 31 als Dipolantenne ausgebildet, die auf einer Seite des Polyimidbandes aufgebracht ist. Die Länge der Dipolantenne beträgt beispielsweise etwa 37,5cm, sodass sie ungefähr für ein Frequenzband von 400MHz ausgelegt ist. Bei einem gängigen Umfang der GNSS-Antenne kann eine derart ausgebildete erste Funk-Antenne fast komplett in Umfangsrichtung um die GNSS-Antenne herum angeordnet werden, wodurch die erste Funk-Antenne dann eine omnidirektionale Abstrahlcharakteristik aufweist.

Ebenso kann auf dem Polyimidband eine wie in Figur 6 dargestellte Antennengeometrie 31 aufgebracht sein. Je nach gewählter Länge ist die als Monopolantenne ausgebildete Anordnung dann für ein entsprechendes Frequenzband ausgelegt, wie es dem Fachmann bekannt ist. Wie in Figur 7 gezeigt, können auch mehrere solcher Antennenanordnungen auf einem Band nacheinander als Antennengeometrie 31 aufgebracht sein, sodass die Antenne in um die GNSS-Antenne gewickeltem Zustand eine omnidirektionale Abstrahlcharakteristik aufweist.

Sind auf der Rückseite des in Figur 5 gezeigten Polyimidbandes beispielsweise zwei Monopolantennen, die eine Länge von etwa 33cm aufweisen, aufgebracht, so ist die erste Funk-Antenne als Breitbandantenne für ein Frequenzband von 400MHz bis 470MHz ausgebildet.

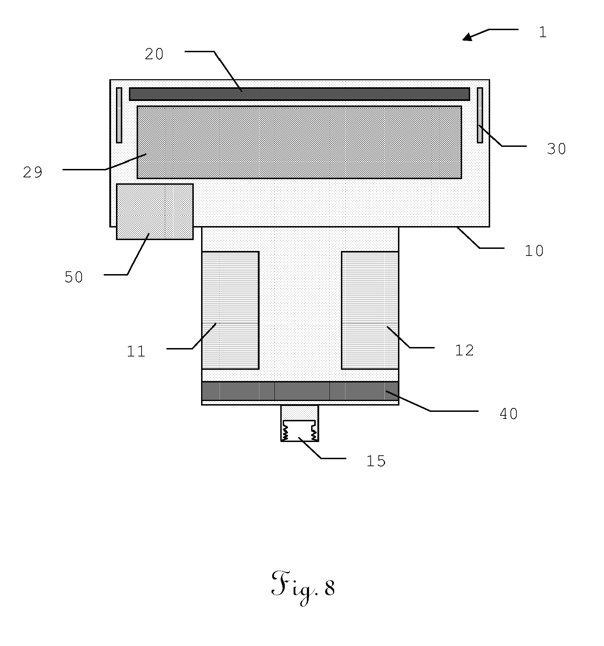

Figur 8 zeigt eine erfindungsgemässe mobile GNSS-Station 1 für den Einsatz in einem relativen GNSS zum Durchführen von präzisen Vermessungsarbeiten, mit einem einzigen Gehäuse 10, in dem zwei Batteriefächer 11,12, eine wie in Figur 4 gezeigte Antennenkombination und ein GNSS-Satellitenempfänger 29 integriert sind. Zusätzlich weist die GNSS-Station 1 am Gehäuse 10 eine Aufnahme für ein ansteckbares Funk-Modul 50 mit Schnittstellen zur ersten und zur zweiten Funk-Antenne 30,40 und zum GNSS-Satellitenempfänger 29 auf. In der Aufnahme befindet sich ein eingestecktes Funkmodul 50 zum Senden oder Empfangen von GNSS-Korrekturdaten, das über die Schnittstellen mit dem GNSS-Satellitenempfänger 29 und mit einer der beiden Funk-Antennen 30,40 verbunden ist.

Das Gehäuse 10 ist pilzförmig ausgebildet, wobei die GNSS-Antenne 20 und die erste Funk-Antenne 30 konzentrisch, oben im Gehäuse 10 und die zweite Funk-Antenne 40 unten im Gehäuse 10 angeordnet sind. Unterhalb der GNSS-Antenne 20 ist der GNSS-Satellitenempfänger 29, der eine Verbindung zur GNSS-Antenne 20 aufweist, angeordnet.

Die beiden Batteriefächer 11,12, die jeweils zur Aufnahme einer Batterie ausgebildet sind, sind am Stiel des pilzförmigen Gehäuses 10 gegenüberliegend angeordnet, sodass durch die schweren Batterien keine ungleichmässige Massenverteilung entsteht. Die GNSS-Station 1 ist dabei sowohl alleinig mit der ersten als auch alleinig mit der zweiten Batterie betreibbar, wodurch ein Wechseln einer Batterie ohne Betriebsausfall möglich ist.

Durch die erfindungsgemässe Integration der ersten und der zweiten Funk-Antenne 30,40 ist eine sehr kompakte Anordnung der Komponenten in einem einzigen Gehäuse 10 ohne abstehende Antennen oder Kabelverbindungen, die beim Gebrauch im Gelände sehr zerstörungsanfällig sind, realisierbar. Durch ein erfindungsgemäss realisierbares Abdecken aller gängigen Funkfrequenzbänder anhand der integrierten Funk-Antennen 30,40 wird des Weiteren eine hohe Kompatibilität mit Ausrüstung anderer Systeme und ebenso eine Nutzungsmöglichkeit der GNSS-Station 1 in Ländern, in welchen nur spezielle Frequenzbänder frei nutzbar sind, erreicht. Da die erste Funk-Antenne 30 erfindungsgemäss sehr hoch im Gehäuse angeordnet ist, ohne dabei jedoch die durch die GNSS-Antenne 20 empfangbaren GNSS-Signale zu beeinflussen, ist eine omnidirektionale Abstrahlcharakteristik möglich. Zusätzlich werden dadurch Abschattungen durch den Benutzer vermieden.

Nach unten zeigend weist das Gehäuse 1 eine Befestigungsmöglichkeit 15 beispielsweise für einen Vermessungsstab auf.

Es versteht sich, dass diese dargestellten Figuren nur Beispiele möglicher Ausführungsformen darstellen.

## Patentansprüche

1. Antennenkombination (2) für eine mobile GNSS-Station (1), mit
• einer planaren, insbesondere kreisscheibenförmigen, GNSS-Antenne (20) mit einer im Wesentlichen vertikal ausgerichteten Drehachse zum Empfang von zirkular polarisierten GNSS-Satellitensignalwellen, und
• einer ersten Funk-Antenne (30), zum Empfang und/oder Aussenden von Funksignalwellen mit GNSS-Korrekturinformation mit mindestens einem ersten Frequenzband in einem Frequenzbereich von 80MHz bis 2450MHz,
**dadurch gekennzeichnet, dass**
die erste Funk-Antenne (30) im Wesentlichen auf Höhe der GNSS-Antenne (20) angeordnet ist und die GNSS-Antenne (20) in Umfangsrichtung mindestens teilweise umgibt, insbesondere wobei die erste Funk-Antenne (30) und die GNSS-Antenne (20) konzentrisch angeordnet sind.

2. Antennenkombination (2) nach Anspruch 1,
**dadurch gekennzeichnet, dass**
die erste Funk-Antenne (30) die GNSS-Antenne (20) in Umfangsrichtung im Wesentlichen umschliesst, insbesondere wobei die erste Funk-Antenne (30) zylindermantelförmig ausgebildet ist.

3. Antennenkombination (2) nach einem der vorangehenden Ansprüche,
**dadurch gekennzeichnet, dass**
die erste Funk-Antenne (30) durch ein, insbesondere zylindermantelförmiges, isolierendes Füllermaterial (5) von der GNSS-Antenne(20) getrennt ist und zum Umfang der GNSS-Antenne (20) höchstens 3cm, insbesondere höchstens 2cm, radial beabstandet ist.

4. Antennenkombination (2) nach einem der vorangehenden Ansprüche,
**dadurch gekennzeichnet, dass**
die erste Funk-Antenne (30) eine Drahtschleifen-Antenne ist.

5. Antennenkombination (2) nach einem der Ansprüche 1 bis 3,
**dadurch gekennzeichnet, dass**
die erste Funk-Antenne (30) eine flächige Antennengeometrie (31) aus leitfähigem Material, das auf einem nicht leitenden Trägermaterial (32) aufgebracht ist, aufweist.

6. Antennenkombination (2) nach Anspruch 4,
**dadurch gekennzeichnet, dass**
das Trägermaterial als Kunststoffband, insbesondere aus Polyimidmaterial, ausgebildet ist.

7. Antennenkombination (2) nach einem der Ansprüche 5 und 6,
**dadurch gekennzeichnet, dass**
die erste Antennengeometrie (31) mindestens eine Dipolantenne und/oder mindestens eine Monopolantenne aufweist.

8. Antennenkombination (2) nach einem der vorangehenden Ansprüche,
**dadurch gekennzeichnet, dass**
die erste Funk-Antenne (30) als Breitbandantenne ausgebildet ist, sodass Funksignalwellen mit einem Frequenzband von 400MHz bis 470MHz omnidirektional empfang- und sendbar sind.

9. Antennenkombination (2) nach einem der vorangehenden Ansprüche,
**dadurch gekennzeichnet, dass**
die Antennenkombination (2) zusätzlich eine zweite, insbesondere planare Funk-Antenne (40) mit einer zweiten Antennengeometrie (41) aufweist, die parallel zur und unterhalb der GNSS-Antenne (20) und mindestens 5cm von dieser beabstandet angeordnet ist, zum Empfang und/oder Senden von Funksignalwellen mit mindestens einem, sich vom ersten Frequenzband unterscheidenden, zweiten Frequenzband in einem Frequenzbereich von 80MHz bis 2450MHz.

10. Antennenkombination (2) nach Anspruch 9,
**dadurch gekennzeichnet, dass**
die zweite Funk-Antenne (40) als Multibandantenne ausgebildet ist, sodass Funksignalwellen mit Frequenzbändern von 850MHz, 900MHz, 1800MHz und 1900MHz, insbesondere zusätzlich 915MHz, 2100MHz und/oder 2400MHz, omnidirektional empfang- und sendbar sind.

11. Antennenkombination (2) nach einem der vorangehenden Ansprüche,
**dadurch gekennzeichnet, dass**
die Antennenkombination (2) in einem einzigen Gehäuse (10) integriert ist, wobei die GNSS-Antenne (20) und die erste Funk-Antenne (30) oben im Gehäuse (10) und die zweite Funk-Antenne (40) unten im Gehäuse (10) angeordnet sind.

12. Mobile GNSS-Station (1) für den Einsatz in einem relativen satellitengestützten Positionierungssystem (Global Navigation Satellite System - GNSS) zum Durchführen von präzisen Vermessungsarbeiten, mit einem einzigen Gehäuse (10), in dem mindestens integriert sind
• ein erstes Batteriefach (11) zur Aufnahme einer ersten Batterie,
• insbesondere ein zweites Batteriefach (12) zur Aufnahme einer zweiten Batterie, wobei die GNSS-Station (1) sowohl alleinig mit der ersten als auch alleinig mit der zweiten Batterie betreibbar ist,
• eine Antennenkombination nach einem der Ansprüche 1 bis 10, und
• ein unterhalb der GNSS-Antenne angeordneter GNSS-Satellitenempfänger (29) mit einer Verbindung zur GNSS-Antenne (20).

13. GNSS-Station (1) nach Anspruch 12,
**gekennzeichnet durch**
ein am Gehäuse (10) angestecktes Funkmodul (50) mit Verbindungen über die Schnittstellen zur ersten oder zur zweiten Funk-Antenne (30;40) und zum GNSS-Satellitenempfänger (29), zum Empfang und Senden von GNSS-Korrekturdaten.

14. GNSS-Station (1) nach Anspruch 12 oder 13,
**dadurch gekennzeichnet, dass**
das Gehäuse (10) eine Aufnahme für ein ansteckbares Funk-Modul (50) mit Schnittstellen zur ersten und zur zweiten Funk-Antenne (30;40) und zum GNSS-Satellitenempfänger (29) aufweist.
